(19) Europäisches Patentamt
European Patent Office
Office européen des brevets

(11) **EP 4 071 259 A1**

(12) **EUROPEAN PATENT APPLICATION**
published in accordance with Art. 153(4) EPC

(43) Date of publication:
**12.10.2022 Bulletin 2022/41**

(21) Application number: **20895974.2**

(22) Date of filing: **24.11.2020**

(51) International Patent Classification (IPC):
**C22C 38/00** (2006.01)     **H01F 1/057** (2006.01)
**B22F 3/00** (2021.01)

(52) Cooperative Patent Classification (CPC):
**B22F 3/00; C22C 38/00; H01F 1/057;** Y02T 10/64

(86) International application number:
**PCT/JP2020/043600**

(87) International publication number:
**WO 2021/111921 (10.06.2021 Gazette 2021/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.12.2019 JP 2019218668**

(71) Applicant: **Shin-Etsu Chemical Co., Ltd.
Tokyo 100-0005 (JP)**

(72) Inventors:
• **KUME, Tetsuya
Echizen-shi, Fukui 915-8515 (JP)**
• **SAKAKI, Kazuaki
Echizen-shi, Fukui 915-8515 (JP)**

(74) Representative: **Mewburn Ellis LLP
Aurora Building
Counterslip
Bristol BS1 6BX (GB)**

(54) **RARE-EARTH SINTERED MAGNET**

(57)     The present invention provides a rare-earth sintered magnet that is characterized in that: R (R indicates one or more elements selected from rare-earth elements, wherein Nd is essential), T (T indicates one or more elements selected from iron-group elements, wherein Fe is essential), X (X indicates one or two elements selected from B and C, wherein B is essential), $M^1$ ($M^1$ indicates one or more elements selected from Al, Si, Cr, Mn, Cu, Zn, Ga, Ge, Mo, Sn, W, Pb, and Bi), 0.1 mass% or less of O, 0.05 mass% or less of N, and 0.07 mass% or less of C are contained; the average crystal grain size is 4.0 $\mu$m or less; and relational expression (1) $0.26 \times D + 97 \leq Or \leq 0.26 \times D + 99$ is satisfied assuming that the degree of orientation is Or [%] and that the average crystal grain size is D [$\mu$m]. With this rare-earth sintered magnet, it is possible to achieve superior magnetic characteristics in which both high Br and high $H_{cJ}$ are achieved.

EP 4 071 259 A1

**Description**

TECHNICAL FIELD

This invention relates to a rare earth sintered magnet having excellent magnetic properties including both high Br and high $H_{cJ}$ and a method for preparing the same.

BACKGROUND ART

Rare earth sintered magnets are a class of functional material which is essential for energy saving and greater functionality, and their application range and production quantity are annually expanding. Among rare earth sintered magnets, Nd-based sintered magnets, referred to as Nd magnets, hereinafter, have a high remanence (designated Br, hereinafter). They are used, for example, in drive motors in hybrid cars and electric vehicles, motors in electric power steering systems, motors in air conditioner compressors, and voice coil motors (VCM) in hard disk drives. While Nd magnets having high Br are used in motors for various applications, Nd magnets having higher values of Br are desired for manufacturing motors of smaller size.

On the other hand, rare earth sintered magnets reduce their coercivity (designated $H_{cJ}$, hereinafter) at high temperature, with irreversible thermal demagnetization taking place. For this reason, the rare earth sintered magnets intended for use in motors mounted on various vehicles, especially electric vehicles are required to have higher values of $H_{cJ}$.

Prior art means for enhancing the Br of Nd magnets are divided into an approach from the composition aspect and an approach from the manufacturing aspect. The known approach from the composition aspect includes the method of reducing the content of R to increase the proportion of $R_2T_{14}X$ phase in Nd magnet and the method of reducing the amount of additive elements which form a solid solution with $R_2T_{14}X$ phase to reduce Br.

However, it is known that as the content of R or other additive elements is reduced, the $H_{cJ}$ of rare earth sintered magnets relating to heat resistance is lowered. Particularly when the content of R is reduced, there are risks like a loss of sintering ability and abnormal grain growth in the sintering step of Nd magnet where densification occurs with the accompanying creation of liquid phase. Thus, for the purpose of obtaining Nd magnets having better properties, it is important to achieve a high Br while suppressing a drop of $H_{cJ}$ due to the reduced content of R or other additive elements. Although it is generally known to add heavy rare earth elements such as Dy and Tb in order to suppress a drop of $H_{cJ}$ or to increase $H_{cJ}$, this approach is not always regarded preferable because heavy rare earth elements such as Dy and Tb are rare resources and expensive and the addition of such elements can invite a drop of Br.

The known approach from the manufacturing aspect includes a method of increasing the amount of a lubricant (e.g., saturated fatty acids and esters thereof) which is added to a powder prior to shaping for improving the degree of orientation of $R_2T_{14}X$ phase, and a method of adjusting manufacture conditions, typically increasing the magnetic field applied upon shaping.

However, it is recognized that when the amount of a lubricant which is added to a powder prior to shaping is increased, the resulting Nd magnet often experiences a noticeable drop of $H_{cJ}$ because of the presence of much C originating from the lubricant although an increased Br is available owing to the improved degree of orientation. Also, for the purpose of increasing the magnetic field applied upon shaping for the orientation of $R_2T_{14}X$ phase, an electromagnet for creating a magnetic field must be of larger size, which requires enlargement of an associated installation and contraction of a magnetic field space, failing to gain industrial efficiency.

Meanwhile, one known means for enhancing the $H_{cJ}$ of Nd magnets is size reduction of crystal grains. This mainly intends to reduce the particle size of fine powder during fine pulverization of the starting alloy prior to shaping, thereby obtaining crystal grains of small size at the end of sintering. It is known that in a certain range of particle size, $H_{cJ}$ increases in linear proportion to a size reduction.

When a magnet material is finely pulverized below a certain level, a lowering of the pulverizing capability during fine pulverization and the concentration of impurities (mainly oxygen and nitrogen) in the finely pulverized material becomes high as a result of an increase of reactivity of finely pulverized material. As a result, the $H_{cJ}$ of Nd magnet lowers, or even when an increase of $H_{cJ}$ is observed, the grain boundary diffusion technique (to be described later) is difficult to apply. For ameliorating these problems, Patent Document 1 discloses to change the jet gas during fine pulverization to an inert gas such as He or Ar.

The other method of enhancing the $H_{cJ}$ of Nd magnets is known from Patent Documents 2 and 3 which relate to a method of letting a heavy rare earth element (e.g., Dy or Tb) selectively collect at grain boundary phase in the Nd magnet (referred to as grain boundary diffusion technique, hereinafter). This method involves the steps of depositing a compound of heavy rare earth element such as Dy or Tb onto the magnet surface as by coating, and effecting heat treatment at high temperature. For main phase grains in the Nd magnet, a structure having a high concentration of Dy or Tb is formed only in a region of a main phase grain in close vicinity to the grain boundary. A high $H_{cJ}$ enhancement effect is achieved while restraining a drop of Br.

PRIOR ART DOCUMENTS

PATENT DOCUMENTS

Patent Document 1: WO 2014/142137
Patent Document 2: WO 2006/044348
Patent Document 3: WO 2013/100010

SUMMARY OF INVENTION

TECHNICAL PROBLEM

The method of Patent Document 1 and the grain boundary diffusion technique of Patent Documents 1 and 2, however, have the following problems.

Patent Document 1 proposes the method of changing the jet gas for fine pulverization to inert gas such as He or Ar, which is difficult to comply with industrial production when a cost difference from nitrogen gas is taken into account. Also, the grain boundary diffusion technique is quite effective for achieving a high coercivity, but suffers from the problem that the $H_{cJ}$ enhancement effect is substantially lost when the content of additive elements or extraneous R in the Nd magnet is reduced for enhancing the Br of Nd magnet or when the amount of impurity elements (e.g., carbon, oxygen and nitrogen) increases as a result of increasing the amount of lubricant to promote orientation. Since the extent of $H_{cJ}$ enhancement effect is limited, it is necessary to increase the coercivity $H_{cJ}$ of the magnet-forming material itself prior to the grain boundary diffusion when the magnet is used in the application of electric vehicles and the like where high heat resistance is required.

An object of the invention, which has been made under the above-mentioned circumstances, is to provide a rare earth sintered magnet meeting both high Br and high $H_{cJ}$ by taking an approach different from the fine pulverization during manufacture and grain boundary diffusion as proposed in the prior art.

SOLUTION TO PROBLEM

Making extensive investigations to attain the above object with a focus on the impurity amount, average crystal grain size, and degree of orientation of a rare earth sintered magnet, the inventors have found that a rare earth sintered magnet having excellent magnetic properties including both high Br and high $H_{cJ}$ is obtained when the contents of O, N and C which are generally regarded as impurities in rare earth sintered magnets are reduced, the average crystal grain size of the magnet is controlled to or below 4.0 $\mu$m, and the degree of orientation meets a specific relationship to the average crystal grain size. The invention is predicated on this finding.

Accordingly, the invention provides a rare earth sintered magnet as defined below.

[1] A rare earth sintered magnet comprising R, T, X, and $M^1$ wherein R is at least one element selected from rare earth elements, essentially including Nd, T is at least one element selected from iron group elements, essentially including Fe, X is one or two elements selected from B and C, essentially including B, $M^1$ is at least one element selected from Al, Si, Cr, Mn, Cu, Zn, Ga, Ge, Mo, Sn, W, Pb, and Bi, the magnet containing up to 0.1% by weight of O, up to 0.05% by weight of N, and up to 0.07% by weight of C, and having an average crystal grain size of up to 4.0 $\mu$m and a degree of orientation that meets the relationship (1):

$$0.26 \times D + 97 \leq Or \leq 0.26 \times D + 99 \qquad (1)$$

wherein Or is the degree of orientation (%) and D is the average crystal grain size ($\mu$m).
[2] The rare earth sintered magnet of [1] which contains R element introduced into the magnet after sintering by grain boundary diffusion, as part of R.
[3] The rare earth sintered magnet of [2] wherein the R element introduced by grain boundary diffusion is at least one element selected from Dy, Tb, and Ho.
[4] The rare earth sintered magnet of any one of [1] to [3] which meets the relationship (2):

$$[T]/14 \leq [X] \leq [R]/2 \qquad\qquad (2)$$

wherein [R], [T], and [X] represent atom percents of R, T, and X, respectively.

[5] The rare earth sintered magnet of any one of [1] to [3], further comprising $M^2$ which is at least one element selected from Ti, V, Zr, Nb, Hf, and Ta, wherein the magnet meets the relationship (3):

$$([T]/14) + ([M^2]\times 2) \leq [X] \leq ([R]/2) + ([M^2]\times 2) \qquad (3)$$

wherein [R], [T], [X], and [$M^2$] represent atom percents of R, T, X, and $M^2$, respectively.

[6]The rare earth sintered magnet of [5] wherein the content of $M^2$ is up to 0.5 at%.

[7] The rare earth sintered magnet of any one of [1] to [6] wherein the content of R is 12.5 to 16.0 at% and the content of $M^1$ is 0.1 to 2.0 at%.

ADVANTAGEOUS EFFECTS OF INVENTION

Now that the O, N and C contents, the average crystal grain size, and the degree of orientation of a rare earth sintered magnet are adjusted to specific ranges and the relation of the average crystal grain size to the degree of orientation is optimized, the rare earth sintered magnet of the invention exhibits excellent magnetic properties including both high Br and high $H_{cJ}$.

DESCRIPTION OF EMBODIMENTS

As defined above, the invention provides a rare earth sintered magnet which is composed of R, T, X, and $M^1$ wherein R is at least one element selected from rare earth elements, essentially including Nd, T is at least one element selected from iron group elements, essentially including Fe, X is one or two elements selected from B and C, essentially including B, $M^1$ is at least one element selected from Al, Si, Cr, Mn, Cu, Zn, Ga, Ge, Mo, Sn, W, Pb, and Bi, and contains O, C, and N as incidental impurities.

R is at least one element selected from rare earth elements, essentially including neodymium (Nd), as mentioned above. Although the content of R is not particularly limited, the R content is preferably at least 12.5 at%, more preferably at least 13.0 at%, from the aspects of restraining crystallization of $\alpha$-Fe in molten alloy and promoting normal densification during sintering. Also, the R content is preferably up to 16.0 at%, more preferably up to 15.5 at%, from the aspect of acquiring high Br.

Although the proportion of Nd in R is not particularly limited, it is preferably at least 60 at%, more preferably at least 75 at% of the overall R elements. Although R elements other than Nd are not particularly limited, preferably Pr, Dy, Tb, Ho, Ce, and Y are contained.

T is at least one element selected from iron group elements, i.e., Fe, Co, and Ni, essentially including iron (Fe), as mentioned above. The content of T is the balance of R, X, $M^1$, O, C, N, and $M^2$ (to be described later), and preferably from 70 at% to 80 at%. Notably, the content of Fe is preferably from 70 at% to 85 at%, more preferably from 75 at% to 80 at% of the overall rare earth magnet.

X is one or two elements selected from boron (B) and carbon (C), essentially including B, as mentioned above. The content of X is preferably at least 5.0 at%, more preferably at least 5.5 at%, from the aspect of fully forming the main phase to acquire a high Br. In consideration of the influence on Br of precipitation of $Nd_1Fe_4X_4$ phase in the case of too high X contents, the content of X is preferably up to 8.0 at%, more preferably up to 7.0 at%.

Though not critical, it is preferred that the contents of R, T, and X meet the relationship (2):

$$[T]/14 \leq [X] \leq [R]/2 \qquad\qquad (2)$$

wherein [R], [T], and [X] represent atom percents of R, T, and X, respectively.

That is, the X content is preferably at least [T]/14, as viewed from the influence on Br of a reduction of $R_2T_{14}X$ phase proportion and the influence on $H_{cJ}$ of formation of $R_2T_{17}$ phase. Also, the X content is preferably up to [R]/2, in consideration of the influence on Br of a $R_2T_{14}X$ phase proportion varying with formation of a X-rich phase such as $R_{1.1}Fe_4B_4$ phase.

$M^1$ is at least one element selected from Al, Si, Cr, Mn, Cu, Zn, Ga, Ge, Mo, Sn, W, Pb, and Bi, as mentioned above. The content of $M^1$ is preferably at least 0.1 at%, more preferably at least 0.3 at%, even more preferably at least 0.5 at%, from the aspect of ensuring a sufficient range of optimum temperature during heat treatment to acquire a satisfactory productivity and the aspect of restraining a decline of $H_{cJ}$. Also, the $M^1$ content is preferably up to 2.0 at%, more preferably up to 1.5 at%, from the aspect of providing a high Br.

The content of O is up to 0.1% by weight, preferably up to 0.08% by weight. If the O content exceeds 0.1% by weight, magnetic properties, especially $H_{cJ}$ decline. The content of N is up to 0.05% by weight, preferably up to 0.03% by weight. If the N content exceeds 0.05% by weight, $H_{cJ}$ declines. The content of C including C contained as part of X element is up to 0.07% by weight, preferably up to 0.05% by weight. If the C content exceeds 0.07% by weight, $H_{cJ}$ declines. Although it is preferred in the invention that the contents of O, N and C be as low as possible, generally these elements are incidental and difficult to completely remove.

The rare earth sintered magnet should have an average crystal grain size of up to 4 $\mu$m, preferably up to 3.5 $\mu$m. If the average crystal grain size exceeds 4 $\mu$m, it may be difficult to obtain a high $H_{cJ}$, failing to attain the object of the invention. The average crystal grain size may be measured, for example, by the following procedure. First, a cross section of a sintered magnet is polished to mirror finish. The magnet is immersed in an etchant, for example, Vilella reagent (mixture of glycerol, nitric acid and hydrochloric acid in a ratio of 3:1:2) to selectively etch the grain boundary phase. The etched cross section is observed under a laser microscope. An image analysis is made on the image observed, and the cross-sectional area of individual grains is measured, from which the diameter of equivalent circle is computed. An average grain size is computed based on the data of the area fraction of each grain size. The average grain size is preferably an average of many grains in images of plural spots, for example, an average of total approximately 2,000 or more grains in images of different 20 or more spots.

The rare earth sintered magnet is adjusted such that it has a degree of orientation which meets the relationship (1):

$$0.26 \times D + 97 \leq Or \leq 0.26 \times D + 99 \qquad (1)$$

wherein Or is the degree of orientation (%) and D is the average crystal grain size ($\mu$m).

When the relationship (1) is met, high values of Br and $H_{cJ}$ are available. Though not well understood, the reason is presumed as follows. In general, the reduction of crystal grain size is achieved by reducing the size of fine particles prior to shaping and sintering. As the fine powder particle size becomes smaller, the surface area of fine powder becomes larger. Then, the frictional resistance among fine particles increases to disturb orientation of fine particles during shaping in a magnetic field. In the inventors' experiment regarding a quantity of such change, for a fine powder corresponding to an average crystal grain size of up to 4 $\mu$m, a detrimental change of 0.26% is recorded relative to a decrement of 1 $\mu$m in crystal grain size. It is known that a high value of Br is not achievable from a fine powder having a low degree of orientation whereas a sharp drop of $H_{cJ}$ occurs in case of too high a degree of orientation. Examining these phenomena comprehensively, the inventors have discovered that high values of Br and $H_{cJ}$ are consistently available when the degree of orientation meets the relationship (1).

From the aspect of taking advantage of the potential of the material to acquire high values of Br, the degree of orientation Or (%) is preferably at least 96%, more preferably at least 97%. The magnet should preferably meet the relationship (1) as well as a degree of orientation in the preferred range and an average crystal grain size of up to 4 $\mu$m. It is noted that the degree of orientation Or (%) can be measured by any well-known techniques, typically electron back scatter diffraction (EBSD) analysis.

The rare earth sintered magnet may contain $M^2$ which is at least one element selected from the group consisting of Ti, V, Zr, Nb, Hf, and Ta. The inclusion of $M^2$ is effective for preventing crystal grains from abnormal growth during the sintering step to avoid a drop of Br. The content of $M^2$ is preferably up to 0.5 at%, more preferably up to 0.3 at%, even more preferably up to 0.2 at%, though not critical. If the content of $M^2$ exceeds 0.5 at%, $M^2$ element may sometimes form a $M^2$-X phase to reduce the proportion of $R_2T_{14}X$ phase, inviting a drop of Br.

When the magnet contains element $M^2$, the contents of R, T, X and $M^2$ preferably meet the relationship (3):

$$([T]/14) + ([M^2] \times 2) \leq [X] \leq ([R]/2) + ([M^2] \times 2) \qquad (3)$$

wherein [R], [T], [X], and [$M^2$] represent atom percents of R, T, X, and $M^2$, respectively. That is, when $M^2$ is contained, the content of X is preferably at least $([T]/14) + ([M^2] \times 2)$ from the aspects of the influence on Br of a reduction of $R_2T_{14}X$ phase proportion and the influence on $H_{cJ}$ of formation of $R_2T_{17}$ phase, and preferably up to $([R]/2) + ([M^2] \times 2)$, as viewed from the influence on Br of a $R_2T_{14}X$ phase proportion varying with formation of a X-rich phase such as $R_{1.1}Fe_4B_4$ phase.

In addition to the aforementioned elements, the rare earth sintered magnet may contain such elements as H, F, Mg, P, S, Cl and Ca as incidental impurities. With respect to the content of these incidental impurities, up to 0.1% by weight of total incidental impurities based on the total of the constitutional elements and incidental impurities is permissible although the content of incidental impurities is preferably as low as possible.

Next, the method of preparing the rare earth sintered magnet according to the invention is described.

The method of preparing the rare earth sintered magnet involves steps which are basically similar to the steps used in the conventional powder metallurgy method and not particularly limited. Generally, the method involves the steps of melting raw materials to form a starting alloy having a predetermined composition, pulverizing the starting alloy into an alloy fine powder, compression shaping the alloy fine powder under a magnetic field into a compact, and heat treating the compact into a sintered magnet.

First, in the melting step, metals or alloys as raw materials for necessary elements are weighed so as to meet the predetermined composition. After weighing, the raw materials are melted, for example, by high-frequency induction heating. The melt is cooled to form a starting alloy. For casting of the starting alloy, the melt casting technique of casting in a flat mold or book mold or the strip casting technique is generally employed. Also applicable herein is a so-called two-alloy technique involving separately furnishing an alloy approximate to the $R_2Fe_{14}B$ compound composition that constitutes the main phase and an R-rich alloy serving as liquid phase aid at the sintering temperature, crushing, then weighing and mixing them. Since the alloy approximate to the main phase composition tends to allow $\alpha$-Fe phase to crystallize depending on the cooling rate during casting and the alloy composition, the alloy is preferably subjected to homogenizing treatment in vacuum or Ar atmosphere at 700 to 1,200°C for at least 1 hour, if desired, for the purpose of homogenizing the structure to eliminate the $\alpha$-Fe phase. When the alloy approximate to the main phase composition is prepared by the strip casting technique, the homogenizing treatment may be omitted. To the R-rich alloy serving as liquid phase aid, not only the casting technique mentioned above, but also the so-called melt quenching technique are applicable.

The pulverizing step is a multi-stage step including, for example, coarse pulverizing and fine pulverizing steps. In the coarse pulverizing step, for example, a jaw crusher, Brown mill or pin mill, or hydrogen decrepitation may be used. In the practice of the invention, hydrogen decrepitation is preferably employed for the purpose of reducing O, N and C contents to acquire improved magnetic properties though not critical. Particularly when the alloy has been formed by strip casting, hydrogen decrepitation is preferably applied. Typically, a coarse powder which has been coarsely pulverized to a size of 0.05 to 3 mm, especially 0.05 to 1.5 mm is obtained.

In the fine pulverizing step, a technique of pulverizing the coarse powder, for example, on a jet mill using a non-oxidative gas stream such as $N_2$, He or Ar may be employed. In the fine pulverizing step, the coarse powder is preferably pulverized to a size of 0.2 to 15 $\mu$m, more preferably 0.5 to 10 $\mu$m. Since impurities O and N in the rare earth sintered magnet are mainly introduced in the fine pulverizing step, the jet mill atmosphere must be controlled for the O and N contents in the magnet can be adjusted. The O content in the rare earth sintered magnet is adjusted by controlling the O content and the dew point of the jet mill atmosphere. Preferably the pulverization atmosphere is controlled to an oxygen concentration of up to 1 ppm and a dew point of -60°C or lower.

Also, the N content in the rare earth sintered magnet may be adjusted, for example, by (A) a technique of finely pulverizing on a jet mill with He or Ar gas jet, (B) a technique of finely pulverizing on a jet mill with $N_2$ gas jet while introducing hydrogen, or (C) a technique of finely pulverizing hydrogen-containing coarse powder on a jet mill with $N_2$ gas jet. When technique (B) of introducing hydrogen gas or technique (C) of using hydrogen-containing coarse powder is used, hydrogen preferentially adsorbs to the active surface created by pulverizing action to prevent adsorption of nitrogen, for thereby reducing the N content in the rare earth sintered magnet.

In either one or both of the steps of coarsely and finely pulverizing the starting alloy, a lubricant such as a saturated fatty acid or ester thereof may be added for enhancing the orientation or alignment of particles during the subsequent step of shaping the powder in a magnetic field. In the lubricant adding step, there arises the ambivalent problem that increasing the amount of the lubricant added is generally effective for promoting orientation, but carbon originating from the lubricant forms more R-CON phase in the rare earth sintered magnet to bring about a considerable drop of $H_{cJ}$. When the fine powder resulting from technique (C) of finely pulverizing hydrogen-containing coarse powder is used herein, the amount of the lubricant added to the fine powder is preferably increased for promoting orientation. In the method of preparing the rare earth sintered magnet from such fine powder, since internal hydrogen is released during heat treatment, the hydrogen acts to decompose the lubricant (having chemically adsorbed to fine particle surfaces) through carbonyl reductive reaction or the like, and hydrogen gas-induced cracking reaction forces further decomposition and dissociation to highly volatile lower alcohols. Consequently, the C content remaining in the rare earth sintered magnet is reduced.

In the shaping step, the alloy powder is compression shaped into a compact by a compression shaping machine while applying a magnetic field of 400 to 1,600 kA/m for orienting or aligning powder particles in the direction of axis of easy magnetization. The compact preferably has a density of 2.8 to 4.2 g/cm³. The compact preferably has a density of at least 2.8 g/cm³ from the aspect of establishing a compact strength for easy handling. For further increasing the strength of the compact as shaped, a binder such as PVA or fatty acid may be added to the powder. Also, the compact preferably has a density of up to 4.2 g/cm³ from the aspects of establishing a sufficient compact strength and preventing any disordering of particle orientation during compression to acquire an appropriate Br. The shaping step is preferably performed in an inert gas atmosphere such as nitrogen or Ar gas to prevent the alloy fine powder from oxidation.

The heat treatment step is to sinter the compact resulting from the shaping step in a non-oxidative atmosphere such as Ar gas or in high vacuum. In the inventive method using the hydrogen-containing coarse powder resulting from technique (C), the compact is preferably held at 200 to 600°C for 5 minutes to 10 hours in a non-oxidative atmosphere or low vacuum atmosphere to prevent the occurrence of cracks due to a temperature drop and temperature difference in the compact associated with the release (endothermic reaction) of hydrogen gas in the compact, before the compact is fired. Most often, the sintering step is preferably carried out by holding at a temperature of 950°C to 1,200°C for 0.5 to 10 hours. Subsequently, the sintered body may be heat treated at a temperature lower than the sintering temperature for the purpose of enhancing $H_{cJ}$. This heat treatment after sintering may be heat treatment in two stages including high-temperature heat treatment and low-temperature heat treatment or a single low-temperature heat treatment. The high-temperature heat treatment is preferably to heat treat the sintered body at a temperature of 600 to 950°C. The low-temperature heat treatment is preferably to heat treat the sintered body at a temperature of 400 to 600°C.

In this way, a rare earth sintered magnet within the scope of the invention is obtained. For the rare earth sintered magnet, the average crystal grain size can be easily measured, for example, through observation under a laser microscope as mentioned above. Specifically, the average grain size is determined by grinding and mirror finishing the magnet, etching the surface with an etchant such as Nital solution or Vilella reagent, taking a reflection electron image of the etched surface, and performing image analysis. Also, the degree of orientation can be measured by the electron back scatter diffraction (EBSD) analysis as mentioned above.

In a further embodiment, the rare earth sintered magnet thus obtained is subjected to grain boundary diffusion treatment, specifically ground to a desired shape, covered with a diffusion source, and further heat treated in the state that the diffusion source is present on the magnet surface. The diffusion source is one or more members selected from oxides of $R^1$, fluorides of $R^2$, oxyfluorides of $R^3$, hydroxides of $R^4$, carbonates of $R^5$, basic carbonates of $R^6$, single metal or alloys of $R^7$ wherein each of $R^7$ to $R^7$ is at least one element selected from rare earth elements. The means of securing the diffusion source to the magnet surface may be a dip coating technique of dipping the sintered magnet in a slurry of the powdered diffusion source to coat the magnet with the slurry and drying, a screen printing technique, or a dry coating technique such as sputtering or pulsed laser deposition (PLD). The temperature of grain boundary diffusion treatment is lower than the sintering temperature and preferably at least 700°C. From the aspect of obtaining the sintered magnet having improved structure and magnetic properties, the treatment time is preferably 5 minutes to 80 hours, more preferably 10 minutes to 50 hours, though not particularly limited. The grain boundary diffusion treatment causes $R^1$ to $R^7$ to diffuse from the coating to the magnet for thereby achieving a further increase of $H_{cJ}$. Although the rare earth element to be introduced by the grain boundary diffusion treatment is designated $R^1$ to $R^7$ for the sake of description, any of $R^7$ to $R^7$ is included in the R component in the rare earth sintered magnet at the end of grain boundary diffusion treatment. The diffusion source containing $R^1$ to $R^7$ is preferably a metal, compound or intermetallic compound containing HR which is at least one element selected from Dy, Tb and Ho because these elements are more effective for increasing $H_{cJ}$.

Although the invention requires only that the rare earth sintered magnet meet the element composition and relationship (1), it is preferred that the magnet further meet relationship (2) or (3). Although it is unnecessary that the magnet contains R introduced by grain boundary diffusion as the R element, it is preferred that the magnet also contain R introduced by grain boundary diffusion because higher values of $H_{cJ}$ are available and the object of meeting both high Br and high $H_{cJ}$ is more effectively attained. In this regard, it is known that since $R^1$ to $R^7$ are introduced by grain boundary diffusion, the resulting magnet has a characteristic distribution of R concentration. Specifically, it is known that the concentration (RE) of R element on the magnet surface having the diffusion source deposited thereon and the concentration (RC) of R element at the center of the magnet meet the relationship: RE > RC.

EXAMPLES

Examples and Comparative Examples are given below for further illustrating the invention, but the invention is not limited thereto.

[Examples 1 to 3]

By furnishing Nd metal, Pr metal, Dy metal, ferroboron alloy, electrolytic Co, Al metal, Cu metal, Ga metal, Si metal, zirconium metal, and electrolytic iron (all metals are of purity ≥ 99%), weighing and mixing them in a predetermined ratio, melting them, and casting by the strip casting method, there was obtained a starting alloy in flake form having a thickness of 0.2 to 0.4 mm. The flake form starting alloy was pulverized by hydrogen decrepitation in a pressurized hydrogen atmosphere into coarse pulverized powder. To 100% by weight of the coarse pulverized powder, an amount as shown in Table 1 of stearic acid as lubricant was added and mixed. Using a jet mill, the mix was subjected to dry pulverization in a nitrogen stream, obtaining fine pulverized powder (alloy powder) having a pulverization particle size $D_{50}$ as shown in Table 1. It is noted that the pulverization particle size $D_{50}$ is a volume basis median diameter determined by the laser diffraction method based on gas stream dispersion.

A mold of a shaping machine was filled with the fine pulverized powder in inert gas atmosphere. While being oriented under a magnetic field of 15 kOe (1.19 MA/m), the powder was compression shaped in a direction perpendicular to the magnetic field. The resulting compact had a density of 3.0 to 4.0 g/cm$^3$. The compact was held in Ar atmosphere at 600°C for 2 hours, then sintered in vacuum at a temperature of 1,040 to 1,080°C (a temperature selected for each sample such that sufficient densification is achieved by sintering) for 5 hours, yielding a Nd magnet block. The Nd magnet block had a density of at least 7.5 g/cm$^3$.

The structure of the sintered magnet was observed under a laser microscope to determine an average crystal grain size. Also, the degree of orientation of the crystalline structure of the magnet was measured by EBSD analysis. The results are shown in Table 1. The Nd magnet block was subjected to metal component analysis by an inductively coupled plasma optical emission spectrometer (ICP-OES). It was also analyzed for oxygen, carbon and nitrogen by infrared absorption gas analysis. The results are shown in Table 2. It is noted that the data in Table 2 are % by weight. The Nd magnet block was machined into a parallelopiped shape sample of 15 mm by 7 mm by 12 mm. The sample was measured for Br and $H_{cJ}$ by a BH tracer, with the results shown in Table 3.

The Nd magnet block was machined to a parallelopiped shape block of 20 mm by 20 mm by 2.2 mm. The block was immersed in a slurry which was obtained by mixing terbium oxide particles having an average particle size of 0.5 $\mu$m with ethanol at a weight fraction of 50%. By coating the slurry and drying, a coating of terbium oxide was formed on the surface of the Nd magnet block. The Nd magnet block having the coating was subjected to high-temperature heat treatment including heating in vacuum at 950°C for 5 hours and cooling down to 200°C at a cooling rate of 20°C/min, for grain boundary diffusion of terbium. Next, the Nd magnet block was subjected to low-temperature heat treatment including heating at 450°C for 2 hours and cooling down to 200°C at a cooling rate of 20°C/min, obtaining a Nd sintered magnet. A parallelopiped piece of 6 mm by 6 mm by 2 mm was cut out of a center portion of the Nd sintered magnet and measured for $H_{cJ}$ by a pulse tracer, with the results shown in Table 3. It is noted that in Table 3, the mark "○" designates that the requirement of the invention is fulfilled and the mark "×" designates that the requirement of the invention is not fulfilled.

[Comparative Example 1]

A flake form starting alloy was prepared by the same procedure as in Example 1. The alloy was subjected to hydrogen decrepitation in a pressurized hydrogen atmosphere and then heat treated at 400°C for 4 hours for dehydrogenation treatment. After the coarse pulverized powder was obtained, fine pulverization, shaping, sintering and diffusion treatment were carried out by the same procedures as in Example 1. Analysis was made in terms of pulverized particle size, crystal grain size, degree of orientation, composition, Br and $H_{cJ}$ prior to grain boundary diffusion treatment, and $H_{cJ}$ after grain boundary diffusion treatment as in Example 1. The results are shown in Tables 1 to 3.

[Comparative Examples 2 and 3]

A magnet was prepared by the same procedure as in Example 1 except that the amount of lubricant (stearic acid) added and the pulverized particle size were changed as shown in Table 1. Analysis was made in terms of pulverized particle size, crystal grain size, degree of orientation, composition, Br and $H_{cJ}$ prior to grain boundary diffusion treatment, and $H_{cJ}$ after grain boundary diffusion treatment as in Example 1, with the results shown in Tables 1 to 3.

[Table 1]

| | Amount of stearic acid added (wt%) | Pulverized particle size ($\mu$m) | Crystal grain size ($\mu$m) | Degree of orientation (%) |
|---|---|---|---|---|
| Example 1 | 0.20 | 3.0 | 3.6 | 98.6 |
| Example 2 | 0.20 | 2.5 | 3.1 | 98.5 |
| Example 3 | 0.20 | 2.0 | 2.8 | 98.4 |
| Comparative Example 1 | 0.20 | 3.0 | 3.6 | 98.7 |
| Comparative Example 2 | 0.07 | 3.0 | 3.7 | 96.5 |
| Comparative Example 3 | 0.20 | 3.5 | 4.5 | 98.6 |

[Table 2]

|  | Nd | Pr | Fe | Co | Cu | A1 | Zr | Si | Ga | B | O | N | C |
|---|---|---|---|---|---|---|---|---|---|---|---|---|---|
| Example 1 | 24.1 | 6.5 | 66.3 | 0.5 | 0.2 | 0.1 | 0.2 | 0.1 | 0.8 | 1 | 0.08 | 0.02 | 0.05 |
| Example 2 | 24.2 | 6.5 | 66.2 | 0.5 | 0.2 | 0.1 | 0.2 | 0.1 | 0.8 | 1 | 0.08 | 0.03 | 0.05 |
| Example 3 | 24.3 | 6.5 | 66.1 | 0.5 | 0.2 | 0.1 | 0.2 | 0.1 | 0.8 | 1 | 0.08 | 0.03 | 0.05 |
| Comparative Example 1 | 24.1 | 6.5 | 66.3 | 0.5 | 0.2 | 0.1 | 0.2 | 0.1 | 0.8 | 1 | 0.15 | 0.06 | 0.13 |
| Comparative Example 2 | 24.3 | 6.6 | 66.1 | 0.5 | 0.2 | 0.1 | 0.2 | 0.1 | 0.8 | 1 | 0.06 | 0.04 | 0.03 |
| Comparative Example 3 | 24.3 | 6.6 | 66.1 | 0.5 | 0.2 | 0.1 | 0.2 | 0.1 | 0.8 | 1 | 0.06 | 0.03 | 0.04 |
| (wt%) | | | | | | | | | | | | | |

[Table 3]

|  | O content | N content | C content | Crystal grain size | Degree of orientation | Br (kG) | $H_{cJ}$ (kOe) | $H_{cJ}$ after grain boundary diffusion (kOe) |
|---|---|---|---|---|---|---|---|---|
| Example 1 | ○ | ○ | ○ | ○ | ○ | 14.1 | 15.5 | 28.0 |
| Example 2 | ○ | ○ | ○ | ○ | ○ | 13.9 | 16.3 | 28.3 |
| Example 3 | ○ | ○ | ○ | ○ | ○ | 13.8 | 16.8 | 28.7 |
| Comparative Example 1 | × | × | × | ○ | ○ | 14.1 | 11.8 | 15.7 |
| Comparative Example 2 | ○ | ○ | ○ | ○ | × | 13.6 | 15.7 | 28.2 |
| Comparative Example 3 | ○ | ○ | ○ | × | ○ | 14.1 | 13.8 | 25.8 |

As seen from Table 3, the magnets of Examples 1 to 3 which met the contents of oxygen, nitrogen and carbon and the conditions of relationship (1) displayed high values of Br and $H_{cJ}$, and $H_{cJ}$ after grain boundary diffusion. By contrast, the magnet of Comparative Example 1 which had higher contents of oxygen, nitrogen and carbon displayed a low value of $H_{cJ}$ after sintering, and the $H_{cJ}$ enhancement effect by grain boundary diffusion treatment was small, failing to acquire a satisfactory coercivity $H_{cJ}$. The magnet of Comparative Example 2, in which relationship (1) was not met and the amount of lubricant added was small, displayed insufficient orientation and failed to acquire satisfactory Br. The magnet of Comparative Example 3 had a larger crystal grain size and displayed a low value of $H_{cJ}$ prior to grain boundary diffusion treatment, indicating an inferior value of $H_{cJ}$ to Examples 1 to 3 despite a noticeable $H_{cJ}$ enhancement effect by grain boundary diffusion treatment.

It has been demonstrated that the rare earth sintered magnets of Examples 1 to 3 within the scope of the invention show values of $H_{cJ}$ after grain boundary diffusion in excess of 27 kOe, and are fully useful in the application requiring high heat resistance, typically electric vehicles. Also, values of Br in excess of 13.7 kG are obtained, indicating possible size reduction of motors or the like.

Claims

1.    A rare earth sintered magnet comprising R, T, X, and $M^1$ wherein R is at least one element selected from rare earth elements, essentially including Nd, T is at least one element selected from iron group elements, essentially including Fe, X is one or two elements selected from B and C, essentially including B, $M^1$ is at least one element selected from Al, Si, Cr, Mn, Cu, Zn, Ga, Ge, Mo, Sn, W, Pb, and Bi, the magnet containing up to 0.1% by weight of O, up to 0.05% by weight of N, and up to 0.07% by weight of C, and having an average crystal grain size of up to 4.0 $\mu$m and a degree of orientation that meets the relationship (1):

$$0.26 \times D + 97 \leq Or \leq 0.26 \times D + 99 \qquad (1)$$

wherein Or is the degree of orientation (%) and D is the average crystal grain size ($\mu$m).

2. The rare earth sintered magnet of claim 1 which contains R element introduced into the magnet after sintering by grain boundary diffusion, as part of R.

3. The rare earth sintered magnet of claim 2 wherein the R element introduced by grain boundary diffusion is at least one element selected from Dy, Tb, and Ho.

4. The rare earth sintered magnet of any one of claims 1 to 3 which meets the relationship (2):

$$[T]/14 \leq [X] \leq [R]/2 \qquad (2)$$

wherein [R], [T], and [X] represent atom percents of R, T, and X, respectively.

5. The rare earth sintered magnet of any one of claims 1 to 3, further comprising $M^2$ which is at least one element selected from Ti, V, Zr, Nb, Hf, and Ta, wherein the magnet meets the relationship (3):

$$([T]/14) + ([M^2] \times 2) \leq [X] \leq ([R]/2) + ([M^2] \times 2) \qquad (3)$$

wherein [R], [T], [X], and $[M^2]$ represent atom percents of R, T, X, and $M^2$, respectively.

6. The rare earth sintered magnet of claim 5 wherein the content of $M^2$ is up to 0.5 at%.

7. The rare earth sintered magnet of any one of claims 1 to 6 wherein the content of R is 12.5 to 16.0 at% and the content of $M^1$ is 0.1 to 2.0 at%.

| International application No. |
|---|
| PCT/JP2020/043600 |

**A. CLASSIFICATION OF SUBJECT MATTER**
Int.Cl. C22C38/00(2006.01)i, H01F1/057(2006.01)i, B22F3/00(2021.01)i
FI: H01F1/057170, C22C38/00303D, C22C38/00304, B22F3/00F

According to International Patent Classification (IPC) or to both national classification and IPC

**B. FIELDS SEARCHED**

Minimum documentation searched (classification system followed by classification symbols)
Int.Cl. B22F3/00, C22C38/00, H01F1/057

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2017-147426 A (SHIN ETSU CHEMICAL CO., LTD.) 24 August 2017 (2017-08-24), paragraphs [0021], [0024], [0026], [0038], [0048]-[0051] | 1-3, 7<br>4-6 |
| Y<br>A | JP 2019-169621 A (TDK CORPORATION) 03 October 2019 (2019-10-03), paragraphs [0045], [0075], [0077]-[0087] | 1-3, 7<br>4-6 |

☐ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 January 2021 | 02 February 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

International application No.

PCT/JP2020/043600

| JP 2017-147426 A | 24 August 2017 | US 2016/0293303 A1<br>paragraphs [0046], [0049], [0051],<br>[0066], [0076]-[0078]<br>EP 3076407 A1<br>CN 106024252 A<br>KR 10-2016-0117364 A |
|---|---|---|
| JP 2019-169621 A | 03 October 2019 | US 2019/0295754 A1<br>paragraphs [0055], [0086],<br>[0088]-[0100]<br>CN 110299237 A |

Form PCT/ISA/210 (patent family annex) (January 2015)

12

**EP 4 071 259 A1**

REFERENCES CITED IN THE DESCRIPTION

**Patent documents cited in the description**

- WO 2014142137 A
- WO 2006044348 A
- WO 2013100010 A